# EUROPEAN PATENT APPLICATION

(11) **EP 4 276 719 A1**
(43) Date of publication of application: **15.11.2023**
(21) Application number: 23158044.0
(22) Date of filing: 22.02.2023
(51) Int. Cl.: G06Q 10/10, G06Q 50/00

(54) **SOCIAL INDICATOR QUANTIFICATION METHOD AND APPARATUS**

(30) Priority: 13.05.2022 JP 2022079201
(71) Applicant: Hitachi, Ltd., Tokyo 100-8280 (JP)
(72) Inventor: MIYAKOSHI, Junichi, Chiyoda-ku, 100-8280 (JP); MIYAKOSHI, Misa, Chiyoda-ku, 100-8280 (JP); MINE, Ryuji, Chiyoda-ku, 100-8280 (JP)
(74) Representative: Strehl Schübel-Hopf & Partner

(57) **Abstract**

A social impact indicator quantification apparatus quantitatively calculates social impact indicators for a plan. The social impact indicator quantification apparatus includes: a logic model construction unit that constructs a quantifiable logic model that indicates a causal relationship regarding the plan and includes a plurality of layers represented by an edge connecting nodes in order to quantify the social impact indicators; a simulation unit that calculates a quantitative value of each of the plurality of social impact indicators based on the quantifiable logic model; and an evaluation unit that uses the quantitative values to perform relative evaluation of the plan.

## Description

### BACKGROUND OF THE INVENTION

The present invention relates to a technique for quantitatively evaluating a social impact indicator (social indicator).

### Background

In recent years, in order to solve global social problems, sustainable development goals (SDGs) have been formulated, and various organizations such as companies and local governments attach importance to attempts to achieve their goals in their business, management, and activities. According to the SDGs, it is expected to achieve sustainable development in a form in which the sustainable development is balanced and integrated in three aspects, social, environmental, and economic aspects. Thus, it is necessary to consider impacts and effects on the three aspects even in activities of each organization such as business of companies. Therefore, it is necessary to predict the impact of business and the like on social, environmental, and economic value axes, and perform activities to improve values.

To realize the activities described above, an indicator group corresponding to the environment and economy, for example, a carbon footprint belonging to an environmental value and a corporate profit belonging to an economic value can be objectively quantified according to measurement of carbon dioxide, a report of corporate activities, and the like, and the quantification has already been performed. Meanwhile, the social values include not only objective indicators such as disparity and fairness but also subjective aspects such as continuity of local culture and quality of life and sense of well-being of local residents through regional development. In addition, for the subjective indicators, it is necessary to consider a change over time. For example, it is conceivable that even if the degree of subjective attachment to scenery decreases due to the construction of a facility, the decrease will be alleviated as people become accustomed to the scenery. Under such circumstances, in decision of plans by local governments and decision of investment and financing by financial institutions, there are increasing examples of using social impact indicators for evaluating impacts of plans, investment, and financing on societies as social values. Therefore, it is necessary to compare differences in social impact indicators among many candidates for a plan and to predict changes in social impact indicators over time. In addition, there are many cases where a logic model is used to evaluate social impact indicators.

As a technique related to the background described above, Japanese Patent Unexamined Publication No. 2005-56377 describes a method using a logic model as a technique for visualizing and evaluating a social impact indicator. In a communication support system described in Japanese Patent Unexamined Publication No. 2005-56377, to support logical discussion development in communication using the Internet or the like, communication basic information is acquired via discussion support using a template, and support for constructing a logic model from the basic information is performed. In addition, Japanese Patent Unexamined Publication No. 2009-252126 describes a technique regarding a network model related to a logic model to be used to evaluate a social impact indicator. In an advertising plan making support device described in Japanese Patent Unexamined Publication No. 2009-252126, a plurality of contact point nodes indicating a consumer mind model and having a conditional probability table, a plurality of nodes having a conditional probability table, and the like are represented by a Bayesian network model associated by a link indicating a causal relationship.

Such a system as described in Japanese Patent Unexamined Publication No. 2005-56377 is effective to create a logic model. Meanwhile, in the system described in Japanese Patent Unexamined Publication No. 2005-56377, the evaluation of a social impact indicator is qualitative, and it is difficult to compare a large number of required candidates for a plan.

In addition, in Japanese Patent Unexamined Publication No. 2009-252126, a plurality of contact point nodes indicating a consumer mind model and having a conditional probability table, a plurality of nodes having a conditional probability table, and the like are represented by a Bayesian network model associated by a link indicating a causal relationship. However, according to Japanese Patent Unexamined Publication No. 2009-252126, information added to an edge of a graph model that quantitatively evaluates a social impact indicator and enables comparison among many candidates for a plan and a change in a subjective indicator over time is a conditional probability, and it is difficult to evaluate the impact of a value in a local region and a change in a value over time. Therefore, an object of the present invention is to appropriately evaluate a plan, investment, financing, and the like (simply referred to as a plan), and support consensus building including the formulation and decision of the plan.

### SUMMARY OF THE INVENTION

To solve the problems described above, an impact on a social impact indicator when a plan parameter is changed is quantitatively estimated.

Specifically, a social indicator quantification method of quantitatively calculating social impact indicators for a plan using a social indicator quantification apparatus including a processor that executes a program and a storage device that stores the program includes: causing the processor to perform logic model construction processing of constructing a logic model that indicates a causal relationship regarding the plan and includes a plurality of layers represented by an edge connecting nodes in order to quantify the social impact indicators; causing the processor to perform simulation processing of calculating a quantitative value of each of the plurality of social impact indicators based on the logic model; and causing the processor to use the quantitative values to perform relative evaluation of the plan.

In addition, the present invention includes a social indicator quantification apparatus that performs the social indicator quantification method, a program that causes the social indicator quantification apparatus to function as a computer, and a storage medium storing the program.

According to the present invention, it is possible to appropriately evaluate a plan and support consensus building including decision of the plan and related to the plan.

### BRIEF DESCRIPTION OF THE DRAWINGS

FIG. 1 is a diagram illustrating an example of a system configuration of a social impact indicator quantification system according to a first example;
FIG. 2 is a diagram illustrating an example of a hardware configuration of devices constituting the social impact indicator quantification system according to the first example;
FIG. 3 is a flowchart illustrating a social impact indicator quantification process according to the first example;
FIG. 4 is a diagram illustrating nodes selected in node selection processing according to the first example;
FIG. 5 is a diagram illustrating a logic model in which edges are connected according to the first example;
FIG. 6 is a diagram illustrating a logic model in which a weight is added to each of edges according to the first example;
FIG. 7 is a diagram illustrating a state in which a part of the logic model in which a weight is added to each of the edges is extracted according to the first example;
FIG. 8 is a diagram illustrating an example of a parameter set in a drive node according to the first example;
FIG. 9 is a diagram illustrating quantification processing according to the first example;
FIG. 10 is a diagram illustrating the parameter of the drive node according to the first example;
FIG. 11 is a graph illustrating the numbers of issued requests for a plan according to the first example;
FIG. 12 is a graph illustrating the numbers of issued requests for a plan according to the first example;
FIG. 13 is a diagram illustrating a simulation result of simulation processing S306 according to the first example;
FIG. 14 is a functional block diagram of a social impact indicator quantification apparatus according to the first example; and
FIG. 15 is a diagram illustrating participant data according to the first example.

### DETAILED DESCRIPTION OF THE PREFERRED EMBODIMENTS

Hereinafter, an embodiment of the present invention is described. In the present embodiment, decision making including consensus building by various involved persons is supported for a plan. Therefore, a quantitative value of a social impact indicator (social indicator) for each of a plurality of plans is calculated based on an effective graph indicating a logic model indicating a causal relationship regarding the plurality of plans. This enable relative evaluation of the plurality of plans. Each of specific examples of the present embodiment is described below.

### First Example

The first example describes formulation of a plan for energy consumption in a certain municipality. Therefore, in the present embodiment, a "degree of acceptance of electricity saving" when renewable energy is introduced into the municipality is assumed as a social impact indicator. In the present example, to support the formulation of a plan of improving environmental awareness in a target region, a social impact indicator quantification system 100 that is a computer system is used. Specifically, the social impact indicator quantification system 100 that predicts how much a degree of acceptance of electricity saving of local residents changes in response to introduction of renewable energy power generation equipment and a request to save electricity to residents, and provides, for example, a plan with prediction of the highest improvement is used.

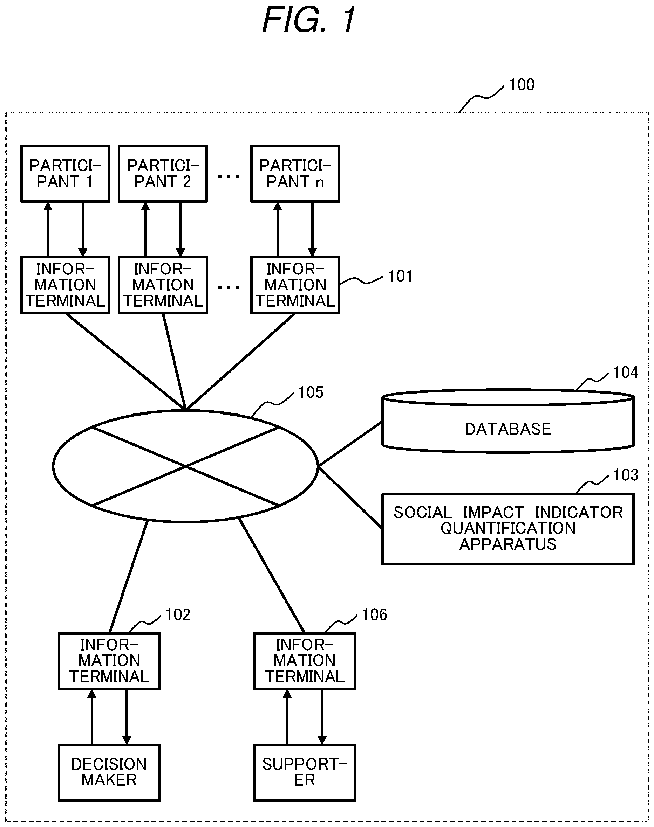

FIG. 1 is a diagram illustrating an example of a system configuration of the social impact indicator quantification system 100 (social indicator quantification system) according to the first example. The social impact indicator quantification system 100 includes a first information terminal 101, a second information terminal 102, a third information terminal 106, a database 104, and a social impact indicator quantification apparatus 103 (social indicator quantification apparatus). The first information terminal 101, the second information terminal 102, the third information terminal 106, the database 104, and the social impact indicator quantification apparatus 103 are connected to each other so as to be able to communicate with each other via a network 105 such as the Internet, a local area network (LAN), or a wide area network (WAN).

The first information terminal 101 is a computer that is used by participants 1 to n (n is an integer of 1 or greater, hereinafter collectively referred to as a participant) such as residents. The first information terminal 101 acquires information of the structure of a logic model considered by the participant and information of an indicator considered to be important, and transmits the acquired information to the social impact indicator quantification apparatus 103. For example, the first information terminal 101 can be implemented by a communicable information processing device such as a personal computer or a smartphone.

The second information terminal 102 is an information terminal that is used by a decision-maker such as a local government. The second information terminal 102 is a computer for displaying the logic model from the social impact indicator quantification apparatus 103 and a simulation result from the social impact indicator quantification apparatus 103. For example, the second information terminal 102 can also be implemented by a communicable information processing device such as a personal computer or a smartphone.

In addition, the third information terminal 106 is an information terminal that is used by a supporter (for example, facilitator) that supports formulation of a plan. The third information terminal 106 is a computer for displaying the logic model from the social impact indicator quantification apparatus 103 and the simulation result from the social impact indicator quantification apparatus 103. For example, the third information terminal 106 can also be implemented by a communicable information processing device such as a personal computer or a smartphone.

The social impact indicator quantification apparatus 103 receives the structure of the logic model of the participant and the indicator considered to be important from the first information terminal 101. Then, the social impact indicator quantification apparatus 103 performs processing of configuring a quantifiable logic model from the acquired logic model, and performs information processing regarding the execution of simulation of the quantifiable logic model and the quantification of the social impact indicator.

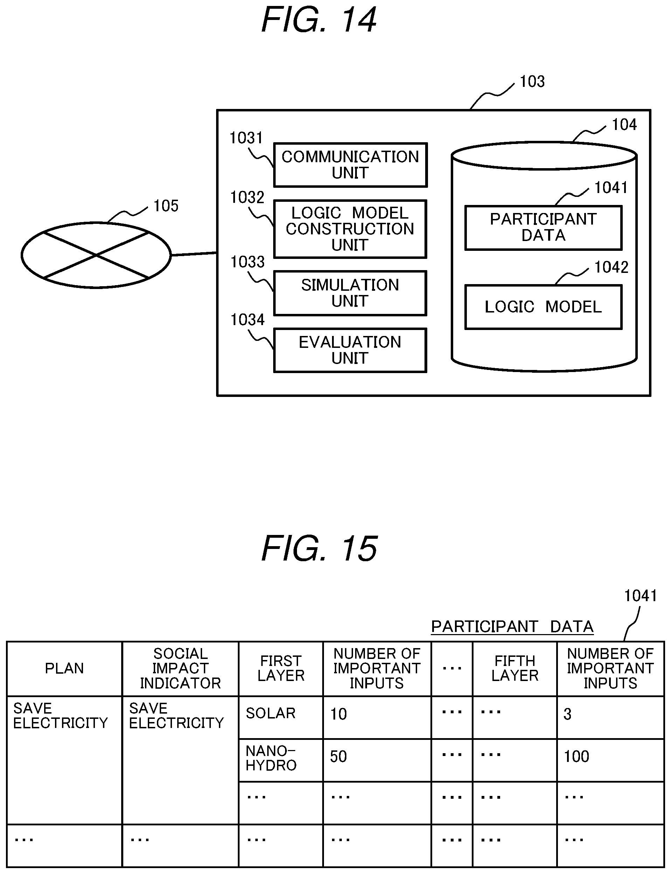

Data summarizing the result received from the first information terminal 101 will be described. FIG. 15 is a diagram illustrating participant data 1041 according to the present example. As illustrated in FIG. 15, the participant data 1041 indicates an important input number indicating the number of inputs as importance from the participant for each indicator. Therefore, a logic model construction unit 1032 counts the number of inputs and records the counted number of inputs. In addition, data input by each participant may be used as the participant data 1041. Further, the participant data 1041 includes information regarding a plan and including an indicator of each layer. The information regarding the plan may be managed as other information.

In addition, the social impact indicator quantification apparatus 103 transmits, to each of the devices such as the second information terminal 102, the quantifiable logic model and a result (for example, a quantitative value of the social impact indicator) of performing the information processing. The database 104 stores data necessary for the social impact indicator quantification apparatus 103. The database 104 may be implemented as a storage device 202 of the social impact indicator quantification apparatus 103.

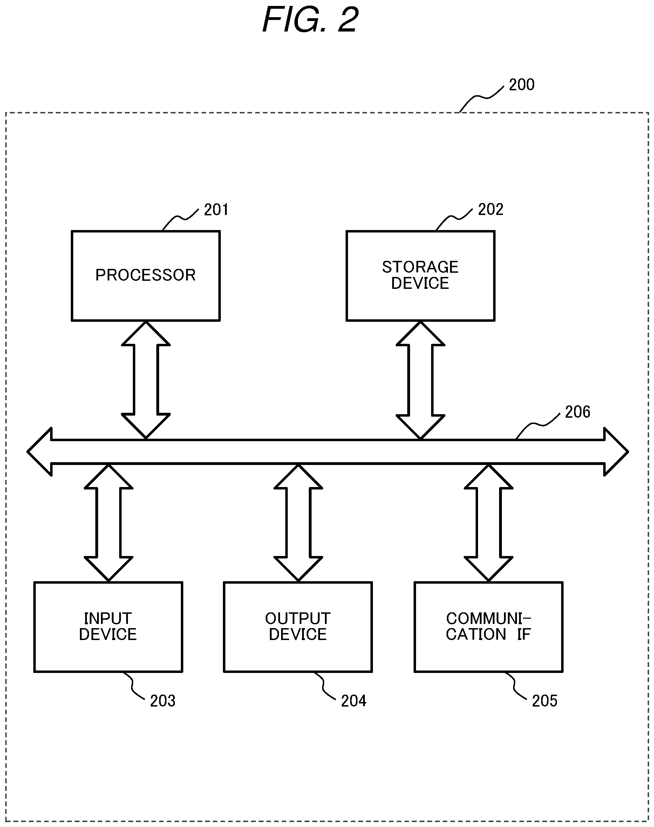

Next, a hardware configuration of the devices included in the social impact indicator quantification system 100 will be described. FIG. 2 is a diagram illustrating an example of the hardware configuration of the devices included in the social impact indicator quantification system 100 according to the present example. The devices are the first information terminal 101, the second information terminal 102, the third information terminal 106, and the social impact indicator quantification apparatus 103 (hereinafter also collectively referred to as a computer 200). Each of the first information terminal 101, the second information terminal 102, the third information terminal 106, and the social impact indicator quantification apparatus 103 includes a processor 201, the storage device 202, an input device 203, an output device 204, and a communication device (communication IF) 205.

The processor 201, the storage device 202, the input device 203, the output device 204, the communication IF 205 are connected to each other via a bus 206. The processor 201 controls the computer 200 and performs calculation according to a program. The storage device 202 has a function as a memory serving as a work area of the processor 201. In addition, the storage device 202 is also a non-transitory or transitory recording medium for storing various programs and data. The storage device 202 is, for example, a read only memory (ROM), a random access memory (RAM), a hard disk drive (HDD), or a flash memory.

The processor 201 is operated according to a logic model construction program, a simulation program, and an evaluation program stored in the storage device 202. These programs may be configured as individual programs or may be configured as a program including at least two programs.

In addition, the input device 203 receives input such as data from a user. Examples of the input device 203 are a keyboard, a mouse, a touch panel, a numeric keypad, a scanner, and a microphone. Further, the output device 204 outputs data such as a result of calculation by the processor 201. Examples of the output device 204 are a display, a printer, and a speaker. The social impact indicator quantification apparatus 103 can be implemented as a server. Therefore, the input device 203 and the output device 204 can be omitted. In addition, the input device 203 and the output device 204 may be integrated as a touch panel or the like. The communication IF 205 is connected to the network 105 and transmits and receives data to and from other devices.

Functional blocks for implementing functions of the social impact indicator quantification apparatus 103 described above will be described. FIG. 14 is a functional block diagram of the social impact indicator quantification apparatus 103 according to the present example. As illustrated in FIG. 14, the social impact indicator quantification apparatus 103 is connected to the network 105 and includes a communication unit 1031, a logic model construction unit 1032, a simulation unit 1033, and an evaluation unit 1034. In the example illustrated in FIG. 14, the database 104 is provided in the social impact indicator quantification apparatus 103.

The communication unit 1031 corresponds to the communication IF 205 illustrated in FIG. 2. The communication unit 1031 is connected to the network 105 and transmits and receives data to and from other devices.

The logic model construction unit 1032 constructs the logic model described above. The simulation unit 1033 performs a simulation on the constructed logic model and quantifies a social impact indicator indicated by the constructed logic model. The evaluation unit 1034 uses the quantified social impact indicator (quantitative value) to evaluate a plan.

In addition, the logic model construction unit 1032, the simulation unit 1033, and the evaluation unit 1034 perform calculation in the processor 201 illustrated in FIG. 2. That is, the logic model construction unit 1032 performs calculation in the processor 201 according to the logic model construction program. The simulation unit 1033 performs calculation in the processor 201 according to the simulation program. Further, the evaluation unit 1034 performs calculation in the processor 201 according to the evaluation program. The processing of the logic model construction unit 1032, the simulation unit 1033, and the evaluation unit 1034 will be described below in detail.

In addition, the database 104 illustrated in FIG. 14 stores the participant data 1041 described below and a quantifiable logic model 1042. The quantifiable logic model 1042 is also merely referred to as a logic model.

Next, social impact indicators and logic models used in the present example will be described in detail. Although the social impact indicators are not clearly defined in general, the social impact indicators indicate social impacts generated by activities and plans in the present example. The social impact indicators are indicators for problems such as equality, life, health, nutrition, poverty, safety, and justice. In addition, as specific examples of social impact indicators in a local region, the social impact indicators include subjective indicators such as work consciousness of local residents and awareness about SDGs. In addition, the social impact indicators are increasingly used to consider social and environmental impacts in investment decisions in financial fields such as investment in and financing for ESG and social impact bonds.

Therefore, to formulate a plan, it is desirable to evaluate the social impact indicators and use results of the evaluation. For the evaluation of the social impact indicators, there are some methods. One of the methods is a logic model. The logic model is represented by a network model constituted by nodes and edges. The nodes indicate various indicators, and the edges indicate a causal relationship among the indicators.

In addition, the logic model is a conceptual tool for clarifying the logic of a social program. Specifically, the logic model can clarify logic by which an introduced resource will affect a target social impact indicator. In addition, the logic model is mainly constituted by five layers. The flow of the logic is in a direction from the first layer to the fifth layer.

Each of the layers will be described.

The first layer is an input layer that includes resources for a plan and a constraint for the plan. The resources are used when the plan is carried out. The resources include a human resource, a physical resource, a financial resource, and a cultural resource. It is important to use these resources to generate effective social impact indicators within the constraint.

The second layer is an active layer that includes a process, work, and an action, which include an action and an activity for the plan or to carry out the plan.

The third layer is an output layer that is a direct result of the activity layer by a person who carries out the plan. This result includes a business activity such as continuous support for a product, various services, and a project provided to a beneficiary.

The fourth layer is an outcome layer that indicates an indicator that is a spillover effect of the output layer described above and is necessary to improve the social impact indicators. Among "outcome", as a target of the spillover effect, subjective indicators such as motivation, a level of satisfaction, and recognition are included in many cases. The "outcome" is divided into a short-term effect and a long-term effect in some cases.

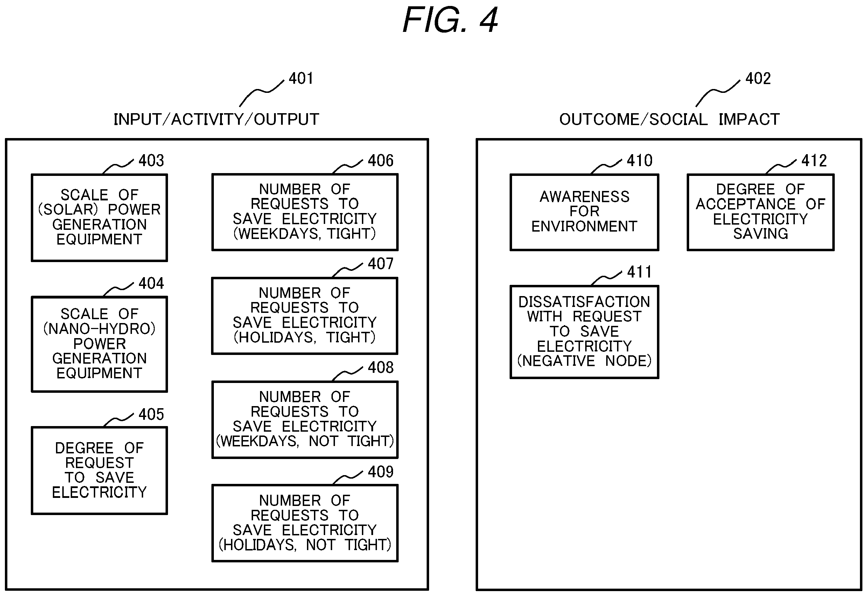

The fifth layer is an impact layer (social impact layer) that indicates a final target shared by the person who carries out the plan or all persons related to the plan, and indicates an improvement indicator for solving a social problem. Mainly, some organizations may set a local target from issues dealt with in SDGs such as disparity correction. In addition, output and outcome indicators may be used instead of the social impact indicators. In this case, consideration is made using an intermediate indicator as a target. This logic model can be represented by a digraph indicating a causal relationship thereof. In addition, the logic model and the digraph will be described below with reference to FIGS. 4 to 6.

A conventional logic model focuses on logically clarifying a spillover effect. As the spillover effect, particularly, qualitative and subjective indicators are included in the outcome layer. An indicator group of these indicators is necessary in consideration of purposes of the social impact indicators and is considered to be effective to evaluate the validity of the logic. However, the qualitative and subjective indicators have the problem of making comparisons among plans difficult. For example, at the stage of considering plans to improve (maximize) the social impact indicators, comparison among the plans may be an important item to be considered. However, due to the problem described above, the social impact indicators become unclear when degrees of improvement are compared among the plans.

In the present example, a difference in social impact indicators among many candidates for plans is quantitatively predicted (quantified) and consideration of a plan that maximizes the social impact indicators is supported. In this case, a logic model (digraph) for the candidates for the plans is created and the content of the logic model will be described below.

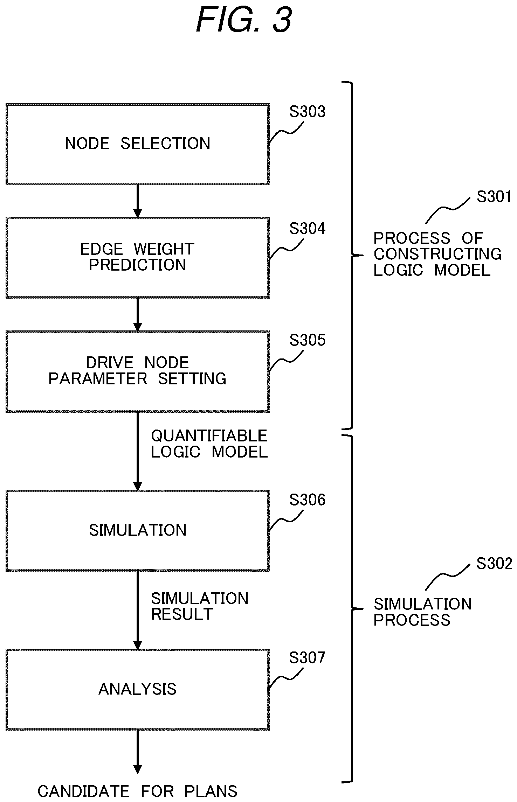

FIG. 3 is a flowchart of a social impact indicator quantification process (social indicator quantification method) according to the first example. The social impact indicator quantification process is mainly divided into two process blocks, a process S301 of constructing a logic model for enabling quantification and a simulation process S302. The process S301 of constructing a logic model for quantification includes node selection processing S303, edge weight prediction processing S304, and drive node parameter setting processing S305. The node selection processing S303 uses data obtained through a workshop or the like for IT support or the like to select nodes necessary for the logic model. The edge weight prediction processing S304 predicts a weight and adds the weight to an edge for quantification based on the selection. By performing the processing S303 and S304, the logic model is created. Then, the drive node parameter setting processing S305 sets a parameter of a node (referred to as a drive node) for enabling simulation of the logic model created in S304 and constructs a quantifiable logic model. The process S301 of constructing the logic model is performed using the first information terminal 101 using data (input as important for an indicator) acquired from the participant.

In addition, in the simulation process S302, the logic model constructed in S301 is quantified and evaluated for formulation of a plan. Therefore, the simulation process S302 includes simulation processing S306 and analysis processing S307. The simulation processing S306 performs quantification simulation on the social impact indicator by performing time development processing using the drive node added to the logic model as a start point.

In addition, the analysis processing S307 analyzes results of the simulation processing S306. The processing will be sequentially described below. In the following description, as a specific case, a request to save electricity when renewable energy is introduced in a simple region is described as an example. In this case, the social impact indicator is a "degree of acceptance of electricity saving" and the plan is a "request to save electricity". The social impact indicator is also merely referred to as an indicator. To quantify the social impact indicator, the drive node is introduced and a weight is added to an edge in the logic model. While focusing on these, the process according to the present example will be described according to a flowchart of FIG. 3. The subject of the process described below is a configuration illustrated in a functional block diagram of FIG. 14.

First, in the node selection processing S303, the logic model construction unit 1032 selects an indicator for each of the above-described five layers in the logic model. In this case, from the viewpoint of quantification, the above-described five layers of the logic model are collectively considered as two layers with different behaviors. The input layer, the activity layer, and the output layer are considered as a first layer (input/activity/output). In addition, similarly, the output layer and the social impact layer are considered as a second layer (outcome/social impact). In this processing, in each of the layers described above, that is, nodes are selected.

FIG. 4 is a diagram illustrating the nodes selected (picked up) in the node selection processing S303. Layers exemplified in FIG. 4 are a first layer 401 and a second layer 402. FIG. 4 exemplifies indicators in the first layer 401 and the second layer 402. The indicators exemplified as the first layer 401 are the scale of (solar) power generation equipment 403, the scale of power generation equipment (nano-hydro) power generation equipment 404, a degree of a request to save electricity 405, the number of requests to save electricity (weekdays, tight) 406, the number of requests to save electricity (weekdays, not tight) 407, the number of requests to save electricity (holidays, tight) 408, and the number of requests to save electricity (holidays, not tight) 409.

Needless to say, indicators other than the indicators described above can be added or the indicators described above can be removed. In addition, as the second layer 402, indicators exemplified are awareness for the environment 410, dissatisfaction (negative node) with a request to save electricity 411, and the degree of acceptance of electricity saving 412. In the second layer 402, indicators other than the indicators described above can be added or the indicators described above can be removed. In this case, the dissatisfaction with the request to save electricity 411 is referred to as a negative node.

When this indicator is a negative value, the indicator indicates the direction of improvement. Therefore, the indicator has a value whose sign is opposite to the other indicators such as the awareness for the environment 410 in terms of the direction of improvement. For example, in a case where these indicators are digitized, when the value of the indicator "awareness for the environment" 410 increases, the awareness increases and becomes positive. On the other hand, when the value of the indicator "dissatisfaction with the request to save electricity" 411 becomes large, the dissatisfaction increases and becomes negative. This makes it complex when simulation which is post-processing is performed. Therefore, the polarity of the negative node is reversed. When the value of the negative node increases, the dissatisfaction decreases.

The node is referred to as a negative node (for example, the node is converted into an indicator "satisfaction with the request to save electricity", which can be considered to be equivalent to a positive node). In addition, for an indicator that makes it difficult to determine the direction of improvement, it is necessary to determine whether the direction of improvement is a positive direction or a negative direction in advance.

In this case, as the first layer, indicators (nodes) of activities regarding power generation equipment and a request to save electricity are selected. The request to save electricity is a request to reduce power by a certain amount when power generated from renewable energy is insufficient. In addition, since the issuance of the request to save electricity depends on the amount of power generated from renewable energy, the scale of power generation equipment introduced and a degree of the request to save electricity are the indicators.

In addition, requests to save electricity are divided into some indicators based on a situation. In this example, the requests to save electricity are divided based on a combination of days of week, and tight and not tight. First, the requests to save electricity are divided based on whether the day is a weekday from Monday to Friday or a holiday which is Saturday or Sunday. In addition, based on a combination with an indicator indicating whether the outside temperature indicates tight (a temperature of 35 °C or higher or 5 °C or lower) or not tight (a condition other than the condition described above), four indicators are present.

In addition, these indicators, that is, nodes can be selected by a method of making a database using related keywords in advance and selecting a necessary indicator from the database 104 or a method of selecting a necessary indicator using a workshop or the like. Then, the logic model construction unit 1032 selects each indicator according to an operation performed on each terminal device and a predetermined rule. Each indicator is a node of the logic model. The workshop includes using the social impact indicator quantification system 100 to acquire data from the various terminal devices.

In addition, in the edge weight prediction processing S304, the logic model construction unit 1032 connects nodes selected in the processing S303 with edges and predicts a weight for each of the edges. In this case, for the connections using the edges, a causal relationship is originally logically represented. However, in quantification, a calculation equation may be inserted between the nodes.

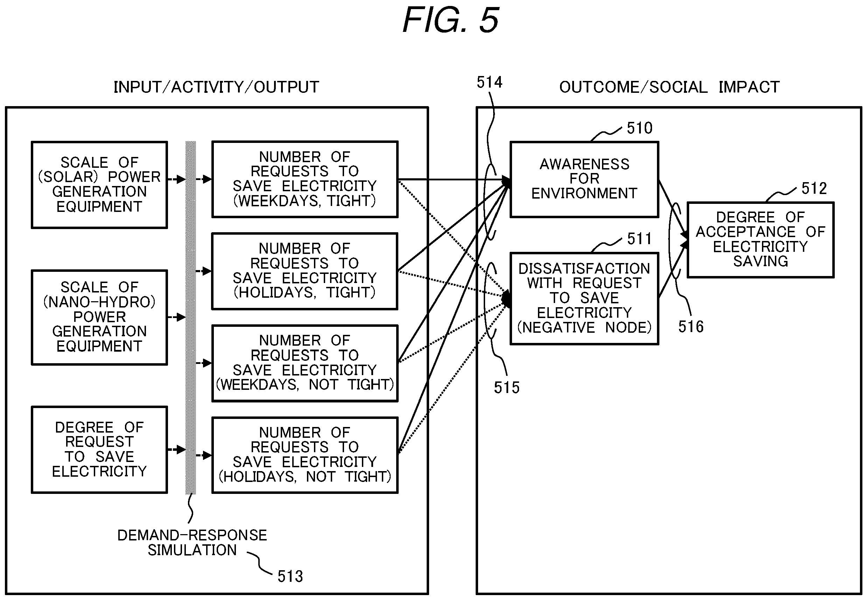

This example is illustrated in FIG. 5. FIG. 5 is a diagram illustrating the logic model in which the edges according to the present example are connected. In the example illustrated in FIG. 5, processing 503 of performing calculation for demand and supply of power is inserted in the input/activity/output layer. The reason why the processing 503 is inserted is that a fluctuation in the amount of power generated by power generation equipment may give an impact on the frequency of a request to save electricity. To calculate this impact, the calculation for demand and supply of power can be implemented by simulation. In addition, to simply perform the calculation, the calculation for demand and supply of power can be implemented by a method of using the frequency of the request to save electricity to determine the impact (for example, a request to save electricity is issued twice per month in average) without taking into consideration of the power generation equipment.

In this case, the edges are four edges 514 for input to an indicator 510, four edges 515 for input to an indicator 511, and two edges 516 for input to an indicator 512. In FIG. 5, the edges 515 are edges for input to the negative node (indicator 511) and thus are indicated by broken lines to clarify a difference from the positive nodes.

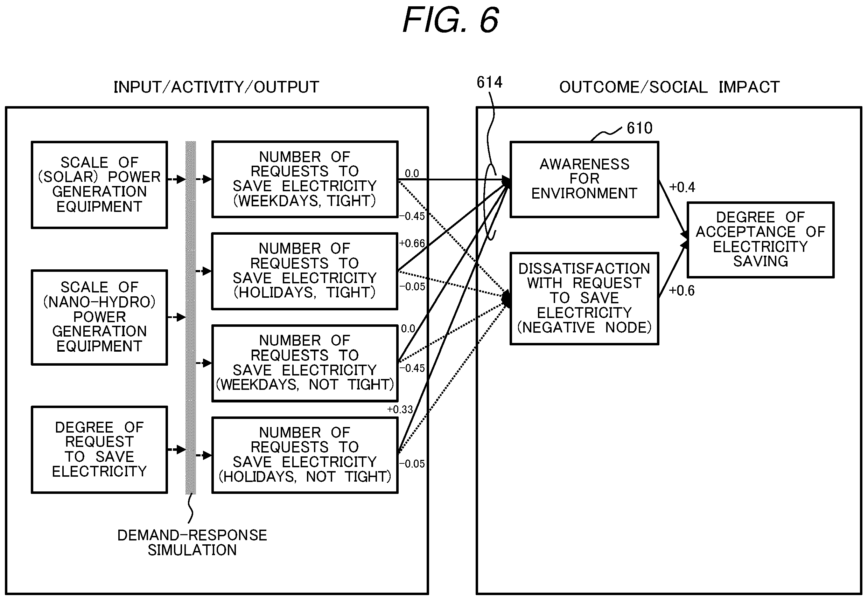

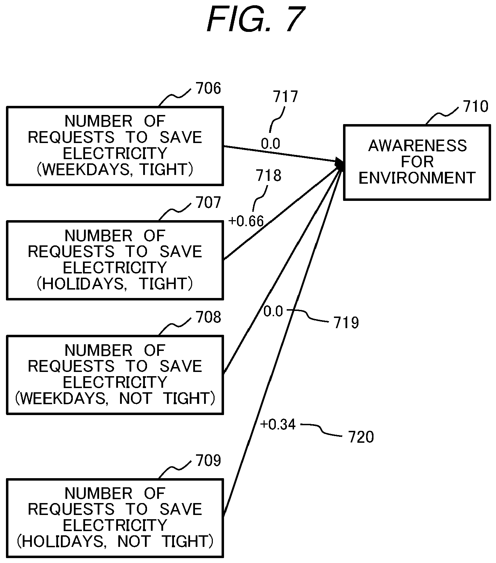

In addition, FIG. 6 illustrates a logic model in which weights (numbers in a range from -1 to 1) are added (predicted) to the edges (514, 515, and 516) illustrated in FIG. 5 by the logic model construction unit 1032. FIG. 7 illustrates a logic model obtained by extracting four edges 614 of an indicator 610 from the logic model illustrated in FIG. 6. A weight input from an indicator 706 and added to an edge for an indicator 710 is 0.0 (number 717 in FIG. 7). In addition, a weight input from an indicator 707 and added to the edge for the indicator 710 is +0.66 (number 718 in FIG. 7). In addition, a weight input from an indicator 708 and added to the edge for the indicator 710 is 0.0 (number 719 in FIG. 7). In addition, a weight input from an indicator 709 and added to the edge for the indicator 710 is +0.34 (number 720 in FIG. 7).

In the present example, the logic model construction unit 1032 adds (predicts) the weights according to the following rules.
1. An absolute value of a sum of weights input to a single indicator node and added to edges is "1".
2. A node to which an edge with a negative weight added thereto is input is distinguished from a node to which an edge with a positive weight added thereto is input. It is desirable that the logic model construction unit 1032 use the communication unit 1031 to output the logic models illustrated in FIGS. 4 to 6 to each of the terminal devices. As a result, it is possible to display the logic models illustrated in FIGS. 4 to 6 on the output device 204.

In addition, the logic model construction unit 1032 determines values of weights for edges based on values (order of preference) of a person who determined a plan or a person concerned, and adds the weights to the edges. This example will be described with reference to FIG. 7.

In FIG. 7, four nodes of the indicator 706 "request to save electricity, a weekday, tight", the indicator 707 "request to save electricity, a weekday, not tight", the indicator 708 "request to save electricity, a holiday, tight), and the indicator 709 "request to save electricity, a holiday, not tight) are connected to the indicator 710 "awareness for the environment" in the order from the top of FIG. 7. This indicate the logic in which awareness for the environment changes due to the four requests to save electricity. In addition, each of the weights means how much an impact is given. The degree of impact can be objectively obtained (from a statistical correlation value). However, in this case, it is assumed that the impacts are given in subjective order of preference. When the weight is "0.0", there is no impact or consideration is not made, and a weight with a large absolute value is added in the order from an impact considered to be large. When an impact is negative, a weight with a negative value is added.

For example, in the example illustrated in FIG. 7, the logic model construction unit 1032 determines that the impact (weight of +0.66 denoted by the number 718) of the indicator 707 "request to save electricity, a weekday, not tight) is the largest. In addition, the logic model construction unit 1032 determines that the impact of the indicator 706 "request to save electricity, a holiday, not tight) (weight of +0.34 denoted by the number 720) is the second largest. Further, the logic model construction unit 1032 determines that the other indicators are not relevant (it is assumed that even if a request to save electricity is issued at the time of tightness, the request is not positively taken). When the indicators are represented in order of preference, a "request to save electricity, a weekday, not tight" > a "request to save electricity, a holiday, not tight" as degrees of requests to save electricity for "awareness for the environment".

In addition, as described above, since the sum of weights is "1", the logic model construction unit 1032 can estimate (predict) the weights in order of preference based on a linear distribution. In the example illustrated in FIG. 7, the sum of the weights is 0.0 + 0.66 + 0.0 + 0.34 = 1. In addition, the logic model construction unit 1032 can add weights to the other nodes in a similar manner. That is, in a case where negative weights are added to edges for input to a negative node, the sum of the weights is "-1". In addition, according to the rule No. 2 described above, nodes are divided into a negative node and a positive node, and in a case where an edge with a positive weight added thereto is input to a certain indicator node, an edge with a negative weight added thereto is not input to the certain indicator node.

Next, the drive node parameter setting S305 will be described. The drive node is a node necessary for the quantifiable logic model, and is not defined in a conventional logic model. The logic model construction unit 1032 selects, as the drive node, a node considered as a candidate for a plan from the input/activity/output layer. In the present example, it is desirable that a node when the indicators "power generation equipment" 403 and 404 illustrated in FIG. 4 and the indicator "degree of request to save electricity" 405 illustrated in FIG. 4 are changed is a candidate for a plan. Therefore, the logic model construction unit 1032 identifies, as the drive node, the indicator "scale of (solar) power generation equipment" 403, the indicator "scale of (nano-hydro) power generation equipment" 404, and the indicator "degree of request to save electricity" 405. As another method, when calculation is not performed in the input/activity/output layer, the logic model construction unit 1032 sets, as the drive mode, indicators which are the indicator "request to save electricity, a weekday, tight" 406, the indicator "request to save electricity, a weekday, not tight" 407, the indicator "request to save electricity, a holiday, tight" 408, and the indicator "request to save electricity, a holiday, not tight" 409.

In addition, the logic model construction unit 1032 can remove the indicator "scale of (solar) power generation equipment" 403, the indicator "scale of (nano-hydro) power generation equipment" 404, and the indicator "degree of request to save electricity" 405.

In this case, it is necessary to set a chronological parameter in the drive node in advance. The chronological parameter is, for example, a value for each of months from January to December. When the indicator "scale of (solar) power generation equipment" 403 is used, a system capacity (kW) of the solar power generation equipment is used as the chronological parameter. In general, the system capacity of the power generation equipment does not change over time, the same value (such as 10 kW) is given as the chronological parameter for a period of time from January to December.

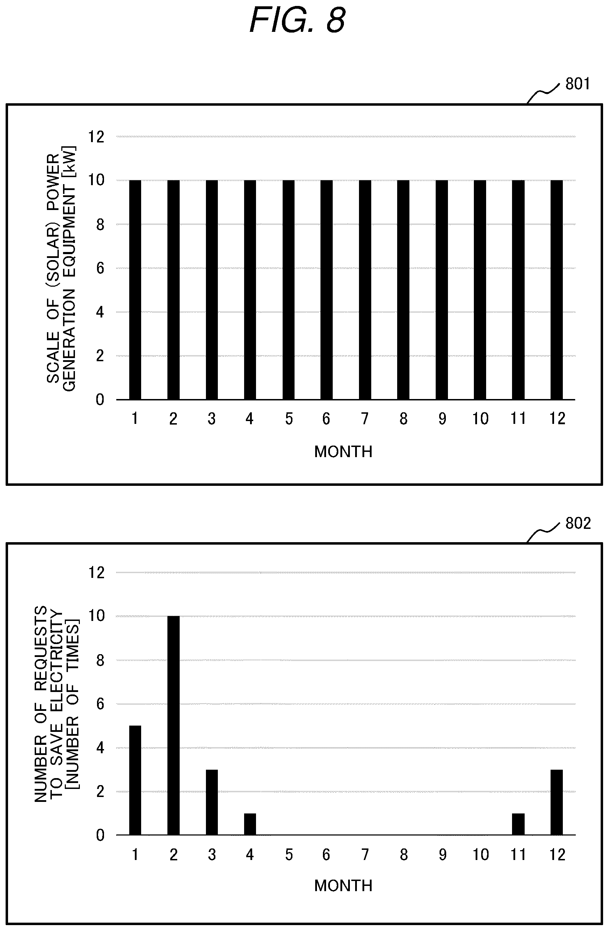

Meanwhile, when the indicator "request to save electricity, a weekday, tight" 406 is set as the drive node, the number of requests to save electricity in January, the number of requests to save electricity in February, and the like are set as the drive node. FIG. 8 illustrates an example of the parameter set in the drive node according to the present example. In the present example, the set parameter is assumed to be for one year in units of months.

In addition, an upper diagram 801 illustrated in FIG. 8 indicates an example of a system capacity of solar power generation equipment, while a lower diagram 802 illustrated in FIG. 8 indicates an example of the number of issued requests to save electricity. In addition, since the unit of the output of the drive node may vary, it is necessary to normalize the output of the drive not to a value such as a value in a range of from 0 to 1. Although any function is used to normalize the output of the drive node, it basically suffices for a degree of impact on logic at a succeeding stage to be reflected. For example, there is a method of normalizing the output of the drive node using the maximum value among drive nodes of the same unit. That is, in the drive node parameter setting processing S305, the logic model construction unit 1032 sets (identifies) the chronological parameter defined by the logic model construction unit 1032 in the above-described manner.

The process S301 of constructing the logic model configured includes the above-described S303 to S305. By performing the process S301, the logic model construction unit 1032 constructs the quantifiable logic model 1042. The logic model construction unit 1032 stores the constructed quantifiable logic model 1042 to the database 104.

Next, the simulation process S302 will be described. First, in the simulation processing S306, the simulation unit 1033 performs time-development simulation on the quantifiable logic model. In this simulation, a minimum time step is performed for a time period corresponding to one hour, but can be changed to be performed for a time period corresponding to one month. In addition, the simulation unit 1033 transfers a value to a connected node according to the parameter set in the drive node for each time step. The simulation unit 1033 performs predetermined processing on the connected node according to the transferred value. As a result, quantification processing is performed on the node.

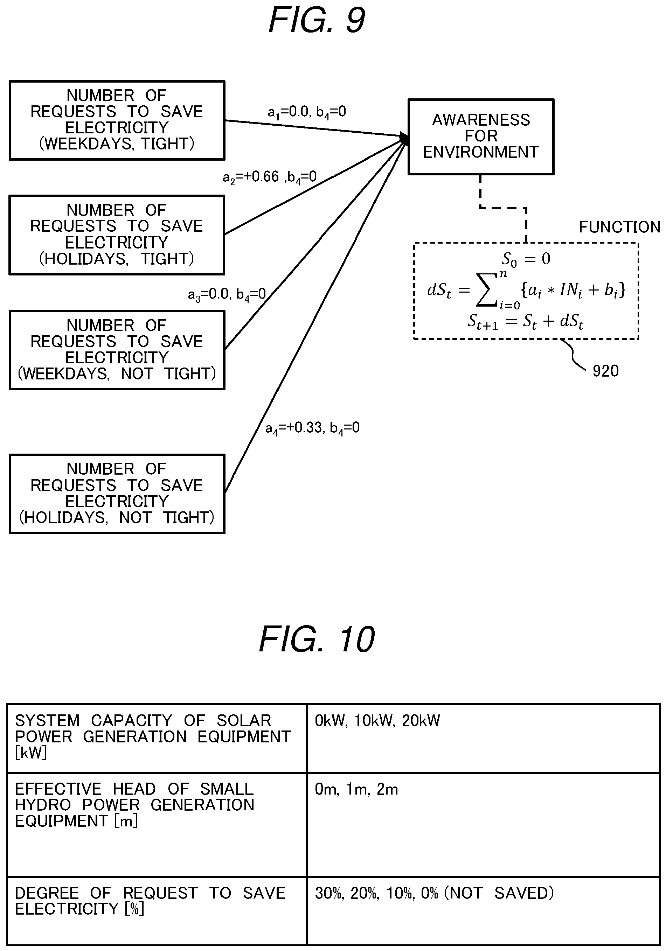

The quantification processing by the simulation unit 1033 will be described with reference to FIG. 9 using the node "awareness for the environment" exemplified in FIG. 7 as an example. Since this node illustrated in FIG. 9 has four inputs, n = 4 in a calculation equation 920 indicated by a function illustrated in FIG. 9. The simulation unit 1033 determines an indicator value (St, St indicate indicator values at the time of a certain time step t) of this node based on the calculation equation. In this case, an initial value S₀ is 0.

However, when the initial value is known based on a questionnaire, a value other than 0 can be specified as the initial value. The simulation unit 1033 performs processing of the calculation equation on a node of the outcome/social impact layer in a certain time step to calculate an indicator value of each node. In addition, the simulation unit 1033 progresses the time step in a time-development manner and updates an indicator value (Sₜ₊₁ that is an indicator value of the next time step t+1 of the time step t) of each node. Then, the simulation unit 1033 repeatedly performs the time step a predetermined number of times to obtain an indicator value of each node after the time step performed the predetermined number of times. Since the time step is performed on a monthly basis for one year, the predetermined number of times is 12 (for 12 months).

In addition, the simulation unit 1033 performs a simulation on the same logic model while changing the parameter of the drive node and can compare differences in indicator values among different plans. By performing this, the simulation unit 1033 can search for a plan that causes the maximum indicator value. Since a social impact indicator (degree of acceptance of electricity saving in this example) that is a node targeted for quantification is included in the indicator values described above, it is possible to quantify the social impact indicator in the simulation. In addition, the evaluation unit 1034 can analyze social impact indicators quantified in this manner among different plans. This will be described with reference to S307 described below.

An example of the quantification will be described using a specific value in the present example. In this example, as data necessary to set the parameter of the drive node, a power generation potential of renewable energy or the amount of power consumed by residents is used. In addition, when renewable energy is insufficient for a demand, a request to save electricity is issued at a certain rate. It is assumed that when renewable energy is insufficient even after the request to save electricity, renewable energy is purchased from the electricity market or the like. In addition, in this example, as the parameter of the drive node, a system capacity of solar power generation equipment, an effective head of small hydro power generation equipment, and a degree of request to save electricity are set.

In addition, the simulation unit 1033 estimates an amount of power to be generated from the scale of each power generation equipment, calculates power supply and demand from the amount of power consumed by residents in advance, and calculate a chronological parameter for the issuance of a request to save electricity. Although this calculation is performed in advance in the present example, it is desirable to perform the calculation in the simulation process S302.

FIG. 10 illustrates the parameter of the drive node. As illustrated in FIG. 10, the number of combinations of plans is 36. For description, plan numbers are added to the plans illustrated in FIG. 10. A plan number 1 indicates 0 kW, 0 m, and 30%, and a plan number 2 indicates 10 kW, 0 m, and 30%. That is, the plan numbers are added such that each of the plan numbers indicates a system capacity of solar power generation equipment, an effective head of small hydro power generation equipment, and a degree of request to save electricity. In addition, a plan number 36 indicates 20 kW, 2 m, and 0%.

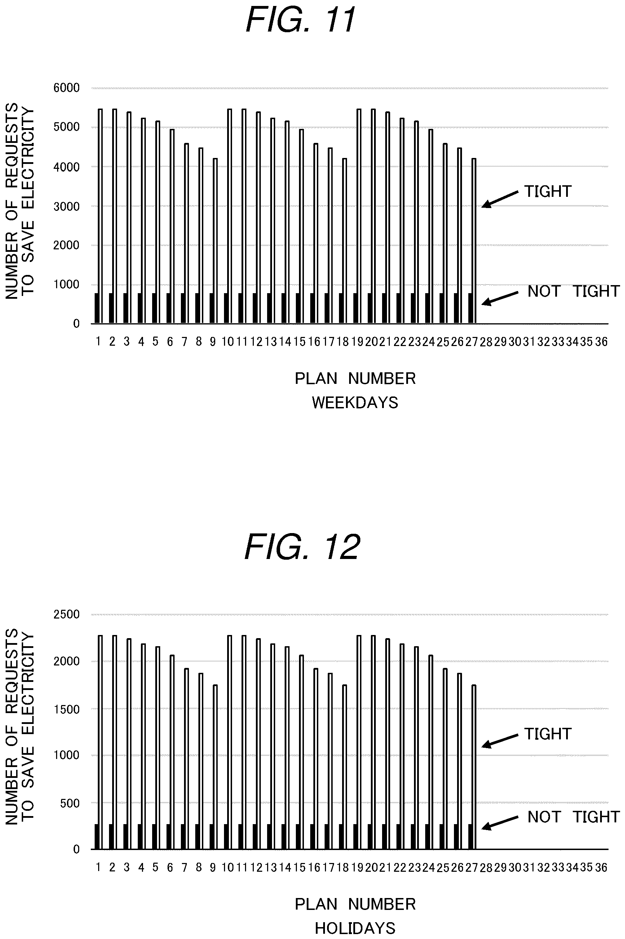

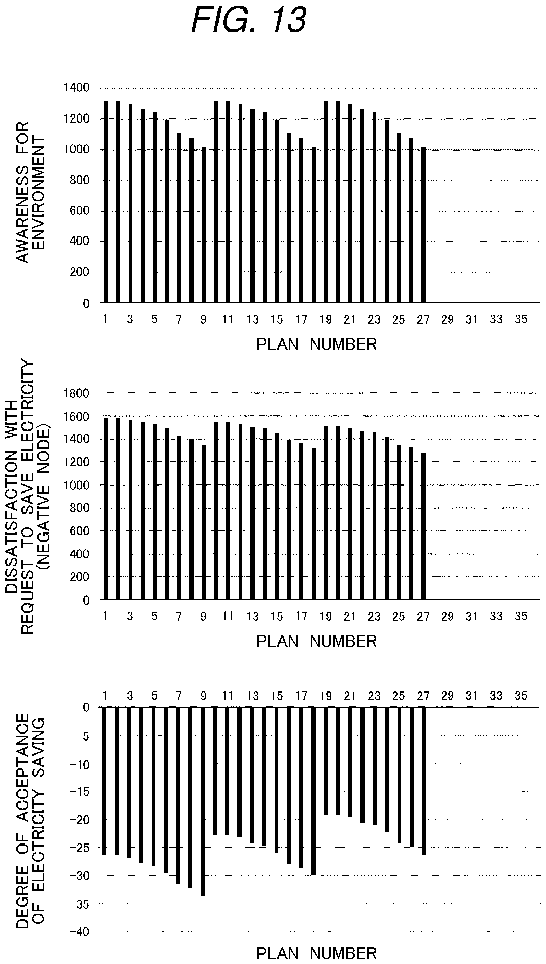

FIGS. 12 and 13 are graphs illustrating the numbers of issued plan requests calculated in advance. The plan requests are four indicators as illustrated in FIG. 4. That is, the indicators are the number of requests to save electricity (weekdays, tight) 406, the number of requests to save electricity (weekdays, not tight) 407, the number of requests to save electricity (holidays, tight) 408, and the number of requests to save electricity (holidays, not tight) 409. FIG. 11 illustrates the numbers of requests to save electricity (weekdays, tight) 406 and the numbers of requests to save electricity (weekdays, not tight) 407 for 36 plans for a year. In addition, FIG. 12 illustrates the numbers of requests to save electricity (holidays, tight) 408 and the numbers of requests to save electricity (holidays, not tight) 409 for the 36 plans for the year.

It is desirable that the simulation unit 1033 use the communication unit 1031 to output the graphs illustrated in FIGS. 11 and 12 to each terminal device. As a result, each terminal device can display the graphs illustrated in FIGS. 11 and 12 on the output device 204. In addition, in this processing, the simulation unit 1033 uses the weights illustrated in FIG. 6 as weights of sides of the quantifiable logic model.

Next, FIG. 13 illustrates the simulation result in the simulation processing S306. FIG. 13 illustrates values of nodes of the quantifiable logic model for each plan. The nodes are "awareness for the environment", "dissatisfaction with a request to save electricity (negative node)", and the "degree of acceptance of electricity saving" which is a social impact indicator. Since the "dissatisfaction with a request to save electricity" is a negative node, values in FIG. 13 are positive but the positive values indicate a negative direction, unlike the other indicators. Therefore, the values of the indicator "dissatisfaction with a request to save electricity" are substantially considered as negative values.

In addition, when values of the node "degree of acceptance of electricity saving" for plan numbers 1 to 9 are viewed, it is found that the indicator degreases. Meanwhile the scale of the solar power generation equipment and small hydro power generation equipment is large for the plan numbers 1 to 9. That is, it is found that in this logic model, when the scale of the power generation equipment increases, the degree of acceptance of electricity saving decreases. The introduction of renewable energy was intuitively considered to increase the degree of acceptance of electricity saving, but caused the opposite effect.

In the analysis processing S307, the evaluation unit 1034 analyzes the simulation result. As a result, the evaluation unit 1034 identifies that the simulation result is caused by the "awareness for the environment" and the "dissatisfaction with the request to save electricity" that are nodes at preceding stages. This logic model is based on the subjective assumption that the "awareness for the environment" increases when a request to save electricity is issued. However, conversely, this suggests that when the power generation equipment is plentiful, power does not become insufficient and the awareness for the environment decreases.

When power is not sufficient, the dissatisfaction increases by a certain level. Therefore, as long as the scale of the power generation equipment is increased as a result of the analysis processing S307 and the number of requests to save electricity is reduced but does not become zero, the social impact indicator may decrease. Therefore, in the present example, in a case where the degree of request to save electricity is not 0, plans that cause the social impact indicator to be maximized are indicated by plan numbers 19 and 20, and indicator values for the plans are -19.19. By the analysis processing S307, the evaluation unit 1034 searches for the maximum value and the like. In this case, the maximum value is relative for each indicator. Therefore, searching for the maximum value by the evaluation unit 1034 means the execution of relative evaluation for building a consensus for each plan. In addition, the evaluation unit 1034 can identify the plan causing the maximum value as a plan that improves the social impact indicator.

Then, the evaluation unit 1034 uses the communication unit 1031 to output, to the second information terminal 102, the plan that improves the social impact indicator. As a result, the second information terminal 102 can display the plan on the output device 204. Therefore, a decision-making person can propose the plan that improves the indicator. The evaluation unit 1034 may output, to the first information terminal 101 and the third information terminal 106, the plan that improves the social impact indicator. As a result, each of the first information terminal 101 and the third information terminal 106 can display the plan on the output device 204. Therefore, it is possible to present the above-described proposal to the participant and the supporter. The description of the first example ends.

### Second Example

The second example is an example in which a business or a company that invests in and finances ESG is evaluated. Even in the present example, processing is performed with the same configuration as described in the first example. In the second example, an example of a drive node is an indicator regarding an investment target business or company. For example, the drive node indicates the number of employees in a region or a ratio (intraregional distribution ratio) of a return in the region on investment and financing.

In addition, in the outcome/social impact layer, an indicator regarding SDGs and an indicator that an investing company attaches importance to are used. For example, it is possible to use subjective indicators such as CO₂ emissions (or CO₂ reduction) and employees' satisfaction with work. It is considered that connection relationships and weights of edges of the logic model can be constructed according to a standard considered by an investing company. The parameter of the drive node that is affected by the effect of investment and financing is changed and the quantifiable logic model obtained in the above-described manner is simulated to quantify the social impact indicator. Therefore, this system can propose, to a decision maker who decides investments and financing, investment and financing business, the form of a company, and the like that may maximize the social impact indicator.

The description of each example of the present invention ends. According to each example, it is possible to perform quantification using a value of a social impact indicator. In addition, relative evaluation of plans is implemented by comparing values of social impact indicators of a large number of candidates for a plan while considering a change in a subjective indicator over time. Therefore, it is possible to support consensus building for a plan.

### REFERENCE SIGNS LIST

100: social impact indicator quantification system
101: first information terminal
102: second information terminal
103: social impact indicator quantification apparatus
104: database
105: network
106: third information terminal
1031: communication unit
1032: logic model construction unit
1033: simulation unit
1034: evaluation unit
1041: participant data
1042: quantifiable logic model
200: computer
201: processor
202: storage device
203: input device
204: output device
205: communication IF

## Claims

1. A social indicator quantification method of quantitatively calculating social impact indicators for a plan using a social indicator quantification apparatus including a processor that executes a program and a storage device that stores the program, the social indicator quantification method comprising:
causing the processor to perform logic model construction processing of constructing a logic model that indicates a causal relationship regarding the plan and includes a plurality of layers represented by an edge connecting nodes in order to quantify the social impact indicators;
causing the processor to perform simulation processing of calculating a quantitative value of each of the plurality of social impact indicators based on the logic model; and
causing the processor to use the quantitative values to perform relative evaluation of the plan.

2. The social indicator quantification method according to claim 1,
wherein in the logic model construction processing, the logic model including a weight of the edge is created, and
in the simulation processing, the quantitative values are calculated using the weight of the edge.

3. The social indicator quantification method according to claim 2,
wherein the social indicator quantification apparatus is connected to a terminal device used by a participant involved in the plan, and
in the logic model construction processing, the weight of the edge is predicted according to input received from the terminal device operated by the participant.

4. The social indicator quantification method according to claim 1, wherein the plurality of layers are an input layer, an activity layer, an output layer, an outcome layer, and an impact layer.

5. The social indicator quantification method according to claim 1, wherein the logic model is a digraph in which the edge indicates a causal relationship of two social impact indicators among the plurality of social impact indicators.

6. A social indicator quantification apparatus that quantitatively calculates social impact indicators for a plan, the social indicator quantification apparatus comprising:
a logic model construction unit that constructs a logic model that indicates a causal relationship regarding the plan and includes a plurality of layers represented by an edge connecting nodes in order to quantify the social impact indicators;
a simulation unit that calculates a quantitative value of each of the plurality of social impact indicators based on the logic model; and
an evaluation unit that uses the quantitative values to perform relative evaluation of the plan.

7. The social indicator quantification apparatus according to claim 6,
wherein the logic model construction unit creates the logic model including a weight of the edge, and
the simulation unit calculates the quantitative values using the weight of the edge.

8. The social indicator quantification apparatus according to claim 7, further comprising a communication unit that is connected to a terminal device used by a participant involved in the plan,
wherein the logic model construction unit predicts the weight of the edge according to input received from the terminal device operated by the participant in processing.

9. The social indicator quantification apparatus according to claim 6, wherein the plurality of layers are an input layer, an activity layer, an output layer, an outcome layer, and an input layer.

10. The social indicator quantification apparatus according to claim 6, wherein the logic model is a digraph in which the edge indicates a causal relationship of two social impact indicators among the plurality of social impact indicators.
